Europäisches Patentamt

European Patent Office

Office européen des brevets

(19)

(11) Numéro de publication: **0 273 809 B1**

## (12) FASCICULE DE BREVET EUROPEEN

(45) Date de publication de fascicule du brevet:
**09.10.91**

(51) Int. Cl.5: **A23G 3/30**

(21) Numéro de dépôt: **87402735.2**

(22) Date de dépôt: **02.12.87**

(54) **Procédé de fabrication directe de gomme de base pour pâte masticatoire et de chewing-gum.**

(30) Priorité: **04.12.86 FR 8616988**

(43) Date de publication de la demande:
**06.07.88 Bulletin 88/27**

(45) Mention de la délivrance du brevet:
**09.10.91 Bulletin 91/41**

(84) Etats contractants désignés:
**BE CH DE GB IT LI**

(56) Documents cités:
EP-A- 0 160 726    EP-A- 0 176 237
BE-A- 662 884      BE-A- 892 322
GB-A- 2 159 384    US-A- 4 241 091

(73) Titulaire: **GENERAL FOODS FRANCE**
**6, Rue Lionel Terray**
**F-92500 Rueil Malmaison(FR)**

(72) Inventeur: **Naumann, Horst**
**1 Allée Marise Bastié**
**F-78350 Les Loges en Josas(FR)**

(74) Mandataire: **Lecca, Jean et al**
**CABINET PLASSERAUD 84, rue d'Amsterdam**
**F-75009 Paris(FR)**

Rank Xerox (UK) Business Services

## Description

La présente invention est relative aux pâtes masticatoires ou pâtes à mâcher (chewing-gums) et aux gommes de base destinées à l'obtention de telles pâtes; elle concerne un nouveau procédé pour leur préparation, ainsi qu'une composition améliorée de ces produits.

Selon la technique antérieure, une pâte masticatoire ou chewing-gum comporte une proportion mineure d'une gomme de base, avec des additifs, et une proportion majeure de substances lui donnant une saveur sucrée, avec des substances aromatiques; selon cette technique, la pâte masticatoire comprend pas plus de 30 % environ (généralement environ 20 %) en poids de gomme de base et additifs et pas moins de 70 % environ (généralement environ 80 %) en poids de substances sucrées (sucre) ou substituants, tels que polyalcools, la saccharine ou l'aspartame, et un peu moins de 1 % de substances aromatiques lui donnant un parfum (menthe, fruits et/ou épices).

Les différents ingrédients sont mélangés à chaud pour constituer la gomme de base qui est purifiée et ensuite mélangée avec les produits sucrants (ou leurs substituants) et les substances aromatiques, et on obtient ainsi la pâte masticatoire du type chewing-gum qui est conditionnée sous forme de tablettes, pastilles, etc.

Dans l'état actuel de la technique, illustre par example par la demande de brevet européen n° 0176 237, il n'est pas possible de doser automatiquement, à température ambiante, les différentes matières que l'on incorpore dans les appareils de malaxage et les extrudeurs qui servent à la fabrication du chewing-gum; on pourrait songer à réaliser le dosage automatique en portant les différentes substances à une température suffisante (de l'ordre de 150° ou davantage), mais une telle élévation de température produirait la dégradation des substances et l'apparation de mauvais goûts et de substances donnant un goût parasite dans le chewing-gum final.

Pour ces raisons on n'a pas réalisé jusqu'à présent de fabrication continue de la gomme de base ni du chewing-gum.

Par ailleurs, les produits obtenus avec les compositions et les procédés classiques comportent un pourcentage élevé de matières extractibles, dont une forte proportion de substances à goût sucré (certaines de ces substances étant défavorables à l'hygiène dentaire et présentant une valeur calorique élevée), le pourcentage de gomme de base insoluble étant relativement faible comme indiqué précédemment (de l'ordre de 20 %).

La présente invention a pour objet de pallier les inconvénients précités en permettant de préparer en continu, avec dosage automatique des composants, et à température modérée, donc sans altération nocive des matières premières, un chewing-gum ne comportant qu'une très faible proportion de matières extractibles, ces matières extractibles étant d'ailleurs relativement neutres en ce qui concerne leur effet sur les dents.

L'invention a tout d'abord pour objet, en ce qui concerne le procédé :

a) un procédé pour fabriquer en continu, avec dosage des composants, une gomme de base composite, non-adhésive, notamment pour pâte masticatoire du type chewing-gum, caractérisé par les opérations successives suivantes :

(i) on introduit, dans un appareil de malaxage du type pétrin industriel, comportant des moyens de chauffage, au moins un élastomère et au moins une charge minérale, on chauffe l'appareil de malaxage pour porter le contenu de celui-ci à une température comprise entre environ 80°C et environ 100°C et on y malaxe pendant une période de temps comprise entre environ 35 minutes et environ 75 minutes le contenu, maintenu à ladite température, de l'appareil de malaxage;

(ii) on vidange ensuite le contenu de l'appareil de malaxage, qui est alors constitué par une masse de prémélange, non adhésive;

(iii) on divise en fragments ladite masse de prémélange;

(iv) on introduit, dans un mélangeur à poudre, des quantités dosées de fragments de ladite masse de prémélange et d'au moins une autre matière première non adhésive de la gomme de base, et on y mélange le contenu pendant plusieurs minutes;

(v) on évacue hors du mélangeur le mélange ainsi obtenu;

b) un procédé pour fabriquer une pâte masticatoire du type chewing-gum, caractérisé par les opérations successives suivantes :

(i) on introduit, dans un appareil de malaxage du type pétrin industriel, comportant des moyens de chauffage, au moins un élastomère et au moins une charge minérale, on chauffe l'appareil de malaxage pour porter le contenu de celui-ci à une température comprise entre environ 80°C et environ 100°C et on y malaxe pendant une période de temps comprise entre environ 35 minutes et environ 75 minutes le contenu, maintenu à ladite température, de l'appareil de malaxage;

(ii) on vidange ensuite le contenu de l'appareil de malaxage, qui est alors constitué par une masse de prémélange, non adhésive;

(iii) on devise en fragments ladite masse de prémélange;

(iv) on introduit, dans un extrudeur à plusieurs corps et à moyens de maintien de chaque corps à une température désirée, successivement des quantités dosées

- de fragments de ladite masse de prémélange et d'au moins une autre matière première non adhésive de la gomme de base,
- d'au moins un plastifiant, et
- d'au moins une substance de saveur, notamment à goût sucré,

le passage des fragments de la masse de prémélange et de la ou des autres matières premières de la gomme de base dans l'extrudeur s'effectuant en quelques minutes, notamment 1 à 5 minutes; et

(v) on évacue hors de l'extrudeur le produit obtenu, on le refroidit et on le met en forme.

De préférence le mélange des fragments de ladite masse de prémélange et d'au moins une autre matière première de la gomme de base est effectué, préalablement à l'introduction dans l'extrudeur, dans un mélangeur à poudre pendant plusieurs minutes, le mélange obtenu dans ledit mélangeur étant introduit dans le premier corps de l'extrudeur, tandis que le ou les plastifiants sont introduits dans le deuxième corps de celui-ci et la ou les substances de saveur sont introduites dans le troisième corps de l'extrudeur.

L'invention consiste également, en ce qui concerne la pâte masticatoire, du type chewing-gum, comportant une gomme de base obtenue par le procédé susvisé, à faire comporter à cette pâte pas moins de 97 % de gomme de base avec au moins un plastifiant, au moins une charge et de l'eau, d'une part, et pas plus de 3 % de produit édulcorant et de substances de saveur, d'autre part.

De préférence la gomme de base comporte environ 3 à 30 % d'eau et environ 2 à 5 % de lécithine et/ou de glycérine comme émulsifiant.

Avantageusement on utilise comme substance de saveur des produits non sucrés, tels que la saccharine ou l'aspartame.

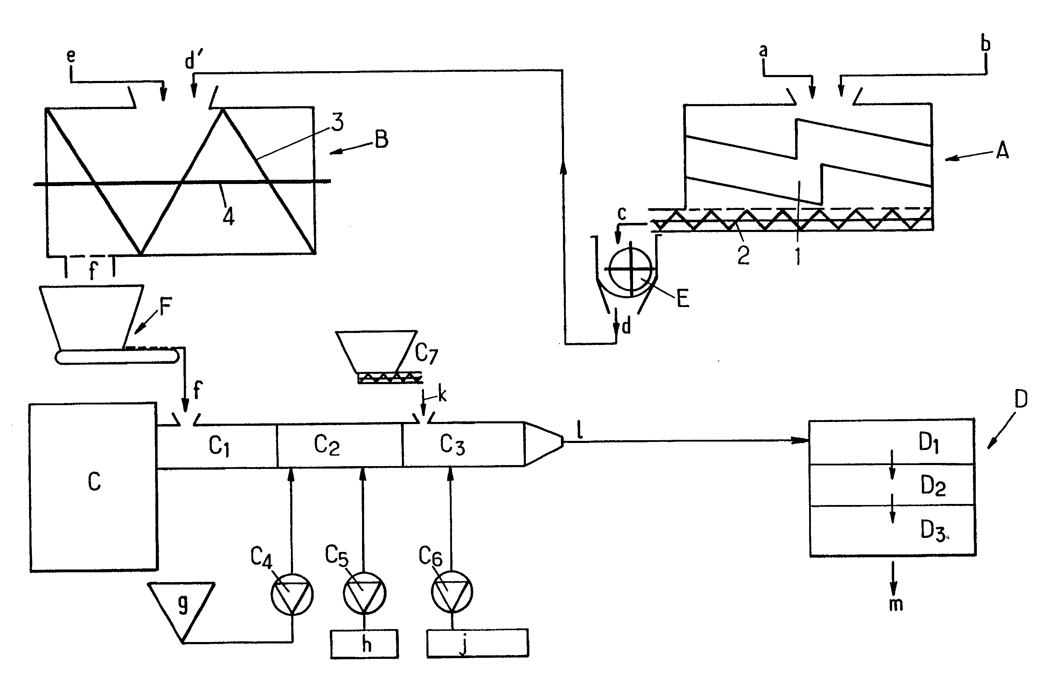

L'invention pourra, de toute façon, être bien comprise à l'aide du complément de description qui suit, ainsi que de la figure unique ci-annexée, lesquels complément et figure, sont bien entendu donnés surtout à titre d'indication.

Sur la figure unique, on a représenté, très schématiquement, un dispositif illustrant la mise en oeuvre du procédé selon l'invention pour obtenir une pâte masticatoire du type chewing-gum, également selon l'invention.

Selon l'invention, se proposant de réaliser un procédé de préparation et composition de pâtes à mâcher du type chewing-gum et de gommes de base pour de telles pâtes, on s'y prend comme suit ou d'une manière analogue.

Le dispositif de la figure unique comporte essentiellement trois unités, à savoir un appareil de malaxage A du type pétrin industriel, un mélangeur à poudre B et un extrudeur C à trois corps $C_1$, $C_2$ et $C_3$, les opérations finales ($D_1$ de refroidissement, $D_2$ de mise en forme et de coupe et $D_3$ de conditionnement) étant regroupées dans le rectangle D.

Dans le dispositif de malaxage A du type pétrin industriel, par exemple du type pétrin comportant deux bras de malaxage 1 ayant la forme de la lettre Z, on introduit, d'une part, le ou les élastomères a et, d'autre part, la ou les charges minérales b.

En particulier on peut utiliser des élastomères du type naturel (chicle, gelutong, sorva qui sont des latex séchés) ou synthétiques (copolymères de l'isopropylène, appelés caoutchouc butyl, polyisobutylènes, polyisobutène), ainsi que des résines synthétiques et/ou des cires.

Quant aux charges minérales, elles sont généralement constituées par du talc et/ou du carbonate de calcium, ce dernier contribuant à la neutralisation des traces d'acides qui peuvent se forme sur les dents et réduisant de ce fait les caries dentaires.

L'appareil de malaxage A est pourvu d'une double enveloppe (non illustrée) permettant de porter son contenu à une température de l'ordre de 80 à 100° C.

Lorsque le ou les élastomères et la ou les charges se trouvent à l'intérieur de l'appareil A et sont maintenues à la température précitée, les bras en Z malaxent ces produits pendant environ 35 mn à 75 minutes selon la composition du mélange.

A titre d'exemple pour un mélange constitué par
caoutchouc butyl 18 %
polyisobutylène 19 %
talc 63 %
et pour une température de 85° du mélange, on malaxe pendant 40 mn.

L'introduction des charges minérales (telles que talc et/ou carbonate) peut se faire en plusieurs étapes, selon le type d'élastomères mis en oeuvre, afin de réduire l'échauffement mécanique de la masse contenue dans l'appareil de malaxage A, échauffement qui est préjudiciable à la qualité du produit fini.

Alors que le ou les élastomères introduits en a sont adhésifs, le prémélange réalisé dans l'appareil de malaxage A est non adhésif et donc facile à manipuler. L'appareil A peut donc être facilement vidangé, même par simple renversement.

Toutefois on prévoit avantageusement à la base de l'appareil de malaxage A une vis sans fin 2 facilitant l'extraction du prémélange c de l'appareil de malaxage A.

A la sortie de la vis sans fin 2 on peut disposer un broyeur à couteaux E ou un dispositif analogue, qui ci-saille le prémélange c en produisant des fragments, tels que copeaux ou paillettes, d de prémélange, c'est-à-dire du mélange d'élastomère(s) et de charge(s) minérale(s).

Ces fragments d se refroidissent à environ 20°C dans un appareil (non représenté), puis sont dosés dans un appareil (également non représenté).

Les fragments refroidis et dosés d' sont introduits dans le mélangeur à poudre B qui comprte par exemple un ruban 3 entraîné en rotation par un arbre 4 à l'intérieur du mélangeur.

On introduit également dans le mélangeur au moins une autre matière première e constitutive de la gomme de base, telle que cires, résines, acétate de polyvinyle, émulsifiants.

Le mélange des composants d' et e dans le mélangeur B dure environ 10 mn à la température ambiante.

A la sortie du mélangeur à poudre B on obtient un prémélange f, qui arrive sur un appareil de dosage F.

Après dosage dans cet appareil la gomme de base non plastifiée est introduite dans le premier corps $C_1$ d'un extrudeur du type à un seule ou à deux vis.

Dans le premier corps ou fourreau $C_1$ de l'extrudeur C on maintient une température de l'ordre de 60°C à 75°C pour porter cette gomme de base non plastifiée à ladite température.

Dans le deuxième corps ou fourreau $C_2$ de l'extrudeur, qui est maintenu à une température de l'ordre de 50°C, sont introduits la sortie du corps $C_1$, le prémélange porté à la température de 60-75°C, d'une part, et au moins un plastifiant liquide, d'autre part.

En particulier on peut introduire par une pompe $C_4$ un débit bien défini d'au moins un plastifiant g constitué par de la lécithine et/ou de la glycérine et par une pompe $C_5$ un débit, également bien défini, d'eau h; notamment dans le cas où on veut fabriquer une gomme de base masticable on introduit de l'eau en une teneur comprise entre 1 et 30 % en poids par rapport à la gomme de base.

La sortie du corps $C_2$ arrive dans le troisième corps ou fourreau $C_3$ de l'extrudeur C, ce corps étant maintenu à une température de 50 à 60°C et recevant en outre les substances les plus sensibles aux élévations de température telles que les substances édulcorantes, les arômes, les vitamines ou tout autre principe actif.

Sur la figure, on a illustré une pompe $C_6$ permettant d'ajouter un débit dosé de telles substances j à l'état liquide et un ensemble $C_7$, à trémie et vis sans fin, destiné à introduire un débit, également dosé, de telles substances k à l'état pulvérulent.

A la sortie de l'extrudeur C, à savoir à la sortie du troisième corps ou fourreau $C_3$, on obtient la pâte masticatoire I qui est refroidie en $D_1$, mise en forme et coupée en $D_2$ et conditionnée, par exemple enveloppée, en $D_3$, le tout d'une manière classique. On obtient finalement à la sortie de l'ensemble D (constitué par les unités $D_1$ de refroidissement, $D_2$ de mise en forme et de coupe et $D_3$ de conditionnement) le produit fini, à savpor le chewing-gum, m.

A titre de variante, on pourrait supprimer le mélangeur à pudre B en introduisant dans le premier corps $C_1$ de l'extrudeur C, non pas le mélange f comme illustré, mais séparément les fragments ou paillettes d' de prémélange et la ou les autres matières premières e de la gomme de base.

En ce qui concerne la composition du chewing-gum, l'invention est essentiellement caractérisée par le fait qu'elle propose un chewing-gum constitué

- par pas moins de 97 % en poids de gomme de base comprenant - en plus des élastomères naturels et/ou de synthèse, avec éventuellement des additifs, tels que cires microcristallines, huiles hydrogénées, monostéarate de glycérol, résines de synthèse, acétates de polyvinyle, et des charges (notamment du talc et/ou du carbonate de calcium) - de la lécithine et/ou de la glycérine (notamment de la lécithine en une teneur de 2 à 5 %) et de l'eau (notamment en une teneu de 5 à 30 %); et
- par pas plus de 3 % en poids d'édulcorant (notamment d'édulcorant artificiel ayant un pouvoir sucrant supérieur à celui du sucre) et de parfum naturel ou artificiel;

une telle composition se distinguant nettement des compositions de la technique antérieure.

On sait en effet qu'actuellement un chewing-gum comporte moins de 30 %, en général 20 %, en poids de gomme de base, constituée à partir d'élastomères (gomme naturelle et/ou synthétique) et de substances plastifiantes (telles que cires, paraffines, huiles végétales), d'additifs tels que le monostéarate de glycérol, les substances plastifiantes et les adhésifs permettant d'impartir au chewing-gum la texture désirée, et qu'à cette gomme de base on ajoute actuellement des quantités massives d'au moins 70 %, en général environ 80 % en poids de sucre (chewing-gum classique sucré) ou de polyalcools et de subsances sucrantes synthétiques (telles que la saccharine ou l'aspartame) pour les chewing-gums plus récents sans sucre, ces derniers chewing-gums ayant l'avantage d'être moins nocifs pour les dents vu l'absence de sucre.

Dans tous les cas, ces chewing-gums antérieurs, avec sucre ou sans sucre, comportent une proportion mineure de gomme de base (moins de 30 %) et une proportion majeure de sucre ou de polyalcools et de substances artificielles à fort pouvoir sucrant.

Il en résulte qu'une proportion relativement élevée du poids du chewing-gum de la technique antérieure est extractible par le consommateur lors du mâchage.

On voit donc la modification essentielle proposée par l'invention, à savoir de réaliser un chewing-gum avec une très forte proportion (d'au moins 97 %) de gomme de base, en y comprenant la lécithine et/ou la glycérine et l'eau, et une très faible proportion (d'au plus 3 %) de substances sucrantes et éventuellement aromatiques.

D'une manière plus précise une gomme de base pour un chewing-gum selon l'invention est constituée à partir du mélange des sustances suivantes :

## TABLEAU I

| | |
|---|---|
| Elastomères naturels et/ou de synthèse (par exemple polyisobutylène et/ou butyl) | environ 3 à 11 % |
| cires microcristallines et/ou huiles hydrogénées | 5 à 20 % |
| Monostéarate de glycérol | 0,5 à 15 % |
| Résines d'hémisynthèse et/ou acétate de polyvinyle | 10 à 30 % |
| Charges (talc et/ou carbonate de calcium) | 20 à 50 % |
| Lécithine et/ou glycérine | 2 à 5 % |
| Antioxygène (BHA par exemple) | 0,05 à 0,1 % (de l'ordre de) |
| Benzoate de sodium | 0,1 % (de l'ordre de) |
| Eau | 5 à 30 % |

La présence de benzoate de sodium permet d'inhiber le développement des moisissures à partir de teneurs en eau supérieures à 6 %.

Pour réaliser le chewing-gum on ajoute à pas moins de 97 % en poids de cette gomme de base pas plus de 3 % en poids de substances sucrantes synthétiques à fort pouvoir sucrant et éventuellement d'arômes (menthe, extraits de fruits et/ou épices).

A titre d'exemple, un chewing-gum particulier selon les indications plus générales qui précèdent peut avoir la composition suivante :

## TABLEAU II

| | | | | |
|---|---|---|---|---|
| Polyisobutylène | 2,55% | 5,51% | Talc | 40,51% |
| Butyl | 2,96% | | BHA | 0,05% |
| Cires microcristallines | 7,10% | 15,45% | Lécithine | 4,0% |
| Huile de soja | 8,35% | | Eau | 10,0% |
| Monostéarate de glycérol | 1,0% | | | |
| Résines d'hémisynthèse | 13,0% | 20,40% | Arômes | 2,68% |
| Acétate de polyvinyle | 7,40% | | Saccharine | 0,3% |
| Benzoate de sodium | 0,1% | | (total arôme + sacharine 2,98%) | |

Une étude comparative, menée par un groupe d'experts, relative à la texture d'échantillons de pâte à mâcher préparée selon l'exemple précédent montre que cette pâte à mâcher a des caractéristiques au moins égales et dans la plupart des cas supérieures à celles des chewing-gums traditionnels notamment en ce qui concerne la dureté incisive initiale et le temps d'hydratation. Les appréciations des experts figurent dans le tableau III ci-après.

D'autre part, on a vérifié, ainsi que le montrent les tableaux IV et V ci-après, que la quantité de substances extraites était très faible (inférieure à 2 % de la masse totale), ces substances étant par ailleurs non métabolisables (talc, carbonate, produits aromatiques, édulcorant, colorant) et que le pH de la salive pendant la mastication avait tendance à se maintenir à un niveau supérieur à 7, ce qui est très favorable pour empêcher la formation de la plaque dentaire.

### TABLEAU III

#### (TEXTURE)

| | Dureté incisive initiale | Cohésion | Elasti-cité finale | Adhésivité finale | Temps d'hydra-tion |
|---|---|---|---|---|---|
| C-G sucré | 6/10 | 8/10 | 3/10 | 3/10 | 30 sec |
| C-G sans saccharose | 5/10 | 7/10 | 3/10 | 1/10 | 25 sec |
| Mastica-toire | 1/10 | 10/10 | 3/10 | 2/10 | 5 sec |

C-G: chewing-gum de la technique antérieure

Masticatoire: pâte à mâcher selon l'exemple précité (tableau II)

TABLEAU IV

(EXTRACTION SALIVAIRE)

Une étude analytique réalisée sur la salive produite par sept volontaires au bout de 20 minutes de mastication de la pâte à mâcher préparée selon la formule de l'exemple précité a donné les résultats suivants :

| | |
|---|---|
| Huile de soja, lécithine, mono-stéarate de glycérol, cires | non détectables |
| Elastomères | traces |
| Résines, acétate de polyvinyle | non détectables |
| Talc | 1,5 % |
| Arôme | 0,2 % |
| BHA | quelques ppm |
| Edulcorant (saccharine) | 0,15 % |

Le talc extrait a été déterminé par dosage pondéral après calcination dans un four à cendres. Les arômes et le BHA présents dans la salive ont été dosés par chromatographie en phase gazeuse. Les huiles, cires et matières insolubles ont été dosées par chromatographie en phase liquide.

TABLEAU V

(pH SALIVAIRE)

7

Des échantillons préparés selon l'exemple précité après 10 mn de mastication provoquent une augmentation du pH de la cavité buccale de 1,5 unités (étude faite grâce à 10 volontaires)

|  | Initial | Après 10 minutes | Après 20 minutes |
|---|---|---|---|
| C-G sucré | 7 | 7,5 | 7,5 |
| C-G sans saccharose | 7 | 7,5 | 7,5 |
| Masticatoire | 7 | 8 | 8,5 |

Pour obtenir un chewing-gum ayant la composition selon l'invention sans dégradation thermique risquant de donner du mauvais goût et d'augmenter la quantité de matière extractible, on doit opérer à basse température.

Le chewing-gum, ayant la composition de l'exemple (Tableau II) et sur lequel ont porté les essais dont les résultats figurent dans les tableaux III, IV et V, a été obtenu en mettant en oeuvre le procédé décrit avec référence à la figure et avec l'appareillage illustré sur la figure.

A titre de variante on peut préparer un chewing-gum ayant une composition selon l'invention par le procédé suivant.

On part d'une gomme de base préexistante obtenue selon un procédé classique relevant de la technologie des polymères.

On porte la gomme de base à une température comprise entre 50°C et 70°C, soit dans un four à microondes, soit dans une étuve, afin de la rendre malaxable dans un pétrin à bras en X calorifugé et préchauffé à 50-70°C.

On malaxe le tout, en ajoutant successivement la lécithine, l'eau à température ambiante, et le talc. La température en fin de malaxage doit être comprise entre 50 et 60°C environ.

On peut ajouer à ce stade, et sous réserve des précautions adéquates relatives à leur stabilité et/ou leur efficacité, des substances sucrantes, des substances aromatiques et éventuellement des substances particulières, telles que vitamines, substances minérales, enzymes, médicaments, etc.

Afin de garantir une innocuité aussi grande que possible du chewing-gum conditionné, qu'il ait été obtenu par le procédé illustré avec référence à la figure ou par la variante précitée, on conditionne le chewing-gum en le recouvrant, notamment lorsqu'il est présenté sous forme de dragées, non pas de sucre ou de sirop (comme cela est classique), mais de substances non cariogènes et non assimilables, telles que gomme arabique, carbonate de calcium et/ou dioxyde de titane.

En particulier on peut réaliser des dragées en découpant le chewing-gum obtenu dans le cadre de l'invention en pièces de 1 à 3 g, qui sont recouvertes d'une couche de carbonate de calcium ou de dioxyde de titane, appliqué avec de la gomme arabique, puis lustrée avec de la gomme arabique et du talc ou avec de l'acétate de polyvinyle dissous à chaud dans de l'alcool. L'augmentation de poids des pièces est de 3 à 30 % de substances non assimilables.

L'invention permet donc d'obtenir une pâte à mâcher du type chewing-gum qui est constituée presqu'en totalité de substances insolubles (gomme de base plastifiée), la proportion de substances solubles, extractibles par la salive au cours du mâchage, étant très minime et ces substances extractibles étant neutres et non nocives vis-à-vis des dents et sans valeur énergétique.

**Revendications**

1. Procédé pour fabriquer en continu, avec dosage des composants, une gomme de base composite, non-adhésive, notamment pour pâte masticatoire du type chewing-gum, caractérisé par les opérations successives suivantes :

(i) on introduit, dans un appareil de malaxage (A) du type pétrin industriel, comportant des moyens de chauffage, au moins un élastomère (a) et au moins une charge minérale (b), on chauffe l'appareil de malaxage pour porter le contenu de celui-ci à une température comprise entre environ 80° C et environ 100° C et on y malaxe pendant une période de temps comprise entre environ 35 minutes et environ 75 minutes le contenu, maintenu à ladite température, de l'appareil de malaxage;

(ii) on vidange ensuite le contenu de l'appareil de malaxage, qui est alors constitué par une masse de prémélange (c), non adhésive;

(iii) on divise en fragments ladite masse de prémélange;

(iv) on introduit, dans un mélangeur à poudre (B), des quantités dosées de fragments (d) de ladite masse de prémélange et d'au moins une autre matière première (e) de la gomme de base, et on y mélange le contenu pendant plusieurs minutes;

(v) on évacue hors du mélangeur le mélange (f) ainsi obtenu.

2. Procédé pour fabriquer une pâte masticatoire du type chewing-gum, caractérisé par les opérations successives suivantes :

(i) on introduit, dans un appareil de malaxage (A) du type pétrin industriel, comportant des moyens de chauffage, au moins un élastomère (a) et au moins une charge minérale (b), on chauffe l'appareil de malaxage pour porter le contenu de celui-ci à une température comprise entre environ 80° C et environ 100° C et on y malaxe pendant une période de temps comprise entre environ 35 minutes et environ 75 minutes le contenu, maintenu à ladite température, de l'appareil de malaxage;

(ii) on vidange ensuite le contenu de l'appareil de malaxage, qui est alors constitué par une masse de prémélange (c), non adhésive;

(iii) on divise en fragments ladite masse de prémélange;

(iv) on introduit dans un extrudeur (C) à plusieurs corps et à moyens de maintien de chaque corps à une température désirée, successivement des quantités dosées

- de fragments (d) de ladite masse de prémélange et d'au moins une autre matière première de la gomme de base,
- d'au moins un plastifiant (g, h), et
- d'au moins une substance (j, k) de saveur, notamment à goût sucré,

le passage des fragments de la masse de prémélange et de la ou des autres matières premières de la gomme de base dans l'extrudeur s'effectuant en quelques minutes (notamment 1 à 5 minutes); et

(v) on évacue hors de l'extrudeur le produit obtenu, on le refroidit et on le met en forme.

3. Procédé selon la revendication 2, caractérisé en ce que le mélange des fragments de ladite masse de prémélange (d) et d'au moins une autre matière première (e) de la gomme de base est effectué, préalablement à l'introduction dans l'extrudeur (C), dans un mélangeur à poudre (B), pendant plusieurs minutes, le mélange obtenu (f) dans ledit mélangeur étant introduit dans le premier corps (C₁) de l'extrudeur (C), tandis que le ou les plastifiants (g, h) sont introduits dans le deuxième corps de celui-ci et la ou les substances de saveur (j, k) sont introduites dans le troisième corps (C₃) de l'extrudeur.

4. Procédé selon la revendication 3, caractérisé en ce que, dans l'extrudeur (C) à trois corps successifs, le premier corps (C₁) est maintenu à une température de l'ordre de 60° C à 75° C et reçoit la gomme de base non plastifiée (f) en provenance du mélangeur à poudre, le deuxième corps (C₂) est maintenu à une température de l'ordre de 50° C et reçoit la sortie du corps (C₁) et au moins un plastifiant liquide (g) et de l'eau (h), et le troisième corps (C₃) est maintenu à une température de l'ordre de 50° C à 60° C et reçoit la sortie du corps (C₂) et les substances (j, k) les plus sensibles aux élévations de températures, telles que les substances édulcorantes et les arômes.

5. Pâte masticatoire du type chewing-gum, caractérisée en ce qu'elle comporte une gomme de base obtenue par le procédé selon l'une quelconque des revendications 1 à 4.

6. Pâte masticatoire selon la revendication 5, caractérisée en ce qu'elle comporte pas moins de 97 % de gomme de base avec au moins un plastifiant, au moins une charge et de l'eau, d'une part, et pas plus de 3 % de produit édulcorant et de substances de saveur, d'autre part.

7. Pâte masticatoire selon la revendication 6, caractérisée en ce que la gomme de base comporte environ 3 à 30 % d'eau et environ 2 à 5 % de lécithine et/ou de glycérine comme émulsifiant.

9

8. Pâte masticatoire selon la revendication 6 ou 7, caractérisée en ce qu'on utilise comme substances de saveur des produits non sucrés, tels que la saccharine et l'aspartame.

9. Pâte masticatoire selon l'une quelconque des revendications 5 à 8, caractérisée en ce qu'elle comporte comme gomme de base un produit ayant la composition suivant :

|  |  |
|---|---|
|  | environ |
| Elastomères naturels et/ou de synthèse | 3 à 11 % |
| cires microcristallines et/ou huiles hydrogénées | 5 à 20 % |
| Monostéarate de glycérol | 0,5 à 15 % |
| Résines d'hémisynthèse et/ou acétate de polyvinyle | 10 à 30 % |
| Charges (talc et/ou carbonate de calcium) | 20 à 50 % |
| Lécithine et/ou glycérine | 2 à 5 % |
| Antioxygène | 0,05 à 0,1 % (de l'ordre de) |
| Benzoate de sodium | 0,1 % (de l'ordre de) |
| Eau . | 5 à 30 % |

10. Dragée obtenue à partir de la pâte masticatoire selon la revendication 9 et caractérisée en ce qu'elle comporte un enrobage de 3 à 30 % de substances non assimilables et non cariogènes, constituées par du talc ou du carbonate de calcium, de la gomme arabique et de l'acétate de polyvinyl.

Claims

1. A process for the continuous production of a non-adhesive composite basic gum, more particularly for a masticatory substance of the chewing gum type, the constituents being metered, characterised by the following successive operations:
    (i) at least one elastomer (a) and at least one mineral filler (b) are introduced into a mixing apparatus (A) of the industrial kneading machine type, comprising heating means, the mixing apparatus is heated in order to bring its contents to a temperature of between approximately 80°C and approximately 100°C and the contents, kept at said temperature, of the mixing apparatus are mixed therein for a period of time of between approximately 35 minutes and approximately 75 minutes;
    (ii) the contents of the mixing apparatus, which contents then comprise a non-adhesive pre-mix (c), are then emptied;

(iii) the said pre-mix is divided into fragments;

(iv) metered quantities of fragments (d) of the said pre-mix and of at least one other raw material (e) of the basic gum are introduced into a powder mixer (B) and the contents are mixed therein for several minutes;

(v) the mix (f) thus obtained is then removed from the mixer.

2. A process for the production of a masticatory substance of the chewing gum type, characterised by the following successive operations:

(i) at least one elastomer (a) and at least one mineral filler (b) are introduced into a mixing apparatus (A) of the industrial kneading machine type, comprising heating means, the mixing apparatus is heated in order to bring its contents to a temperature of between approximately 80°C and approximately 100°C and the contents, kept at said temperature, of the mixing apparatus are mixed therein for a period of time of between approximately 35 minutes and approximately 75 minutes;

(ii) the contents of the mixing apparatus, which contents then comprise a non-adhesive pre-mix (c), are then emptied;

(iii) the said pre-mix is divided into fragments;

(iv) there are introduced successively into an extruder (C) comprising a plurality of bodies and means for keeping each body at a required temperature, metered quantities of the following:

- fragments (d) of the said pre-mix and at least one other raw material of the basic gum,
- at least one plasticiser (g, h) and
- at least one flavouring substance (j, k), more particularly with a sweet taste,

the fragments of the pre-mix and of the raw material or raw materials of the basic gum passing through the extruder within a period of some minutes (more particularly 1 to 5 minutes); and

(v) the resulting product is then removed from the extruder and is cooled and shaped.

3. A process according to claim 2, characterised in that mixing of the fragments of the said pre-mix (d) and of at least one other raw material (e) of the basic gum is effected, prior to introduction into the extruder (C), in a powder mixer (B), for several minutes, the mix (f) obtained in the said mixer being introduced into the first body $(C_1)$ of the extruder (C) while the plasticiser or plasticisers (g, h) are introduced into the second extruder body and the flavouring substance or substances (j, k) are introduced into the third body $(C_3)$ of the extruder.

4. A process according to claim 3, characterised in that in the extruder (C) comprising three successive bodies the first body $(C_1)$ is kept at a temperature of the order of 60°C to 75°C and receives the non-plasticised basic gum (f) from the powder mixer, the second body $(C_2)$ is kept at a temperature of the order of 50°C and receives the output of the body $(C_1)$ and at least one liquid plasticiser (g) and water (h), and the third body $(C_3)$ is kept at a temperature of the order of 50°C to 60°C and receives the output of the body $(C_2)$ and the substances (j, k) which are the most sensitive to the temperature rises, such as sweeteners and aromas.

5. A masticatory substance of the chewing gum type, characterised in that it contains a basic gum produced by the process according to any one of claims 1 to 4.

6. A masticatory substance according to claim 5, characterised in that it contains not less than 97% of basic gum with at least one plasticiser, at least one filler and water, on the one hand, and not more than 3% of sweetener and flavouring substances, on the other hand.

7. A masticatory substance according to claim 6, characterised in that the basic gum contains approximately 3 to 30% of water and approximately 2 to 5% of lecithin and/or glycerine as emulsifier.

8. A masticatory substance according to claim 6 or 7, characterised in that the flavouring substances used are non-sugar products, such as saccharine and aspartame.

9. A masticatory substance according to any one of claims 5 to 8, characterised in that it contains a product of the following composition as the basic gum:

|  | Approximately |
|---|---|
| Natural and/or synthetic elastomers | 3 to 11% |
| Microcrystalline waxes and/or hydrogenated oils | 5 to 20% |
| Glycerol monostearate | 0.5 to 15% |
| Hemisynthesis resins and/or polyvinyl acetate | 10 to 30% |
| Fillers (talc and/or calcium carbonate) | 20 to 50% |
| Lecithin and/or glycerine | 2 to 5 %. |
| Anti-oxidant | (of the order of) 0.05 to 0.1% |
| Sodium benzoate | (of the order of) 0.1% |
| Water | 5 to 30%. |

10. 10. A dragee produced from the masticatory substance according to claim 9 and characterised in that it comprises a coating of 3 to 30% of non-assimilable and non-cariogenic substances, consisting of talc or calcium carbonate, gum arabic and polyvinyl acetate.

## Patentansprüche

1. Verfahren zur kontinuierlichen Herstellung unter Dosierung der Bestandteile einer nicht klebenden Gummigrundmasse, insbesondere für eine Kaumasse vom Kaugummi-Typ, gekennzeichnet durch die nachstehenden aufeinanderfolgenden Maßnahmen:
   (i) man bringt in eine Knetvorrichtung (A) vom Typ eines Industrieknetwerks mit Mitteln zum Heizen zumindest ein Elastomeres (a) und zumindest einen mineralischen Füllstoff (b) ein, erhitzt die Knetvorrichtung, um deren Inhalt auf eine Temperatur zwischen etwa 80 und etwa 100°C zu bringen und knetet dort während einer Zeitdauer zwischen etwa 35 Minuten und etwa 75 Minuten den bei der genannten Temperatur der Knetvorrichtung gehaltenen Inhalt;
   (ii) man entnimmt hierauf den Inhalt der knetvorrichtung, der dann aus einer nicht-klebenden Vormischungsmasse (c) gebildet wird;
   (iii) man zerteilt diese Vormischungsmasse in Fragmente;

12

(iv) man bringt in einen Pulvermischer (B) dosierte Mengen der Fragmente (d) der Vormischungsmasse und zumindest ein weiteres Ausgangsmaterial (e) der Gummigrundlage ein und mischt dort den Inhalt während mehrerer Minuten;

(v) man evakuiert außerhalb des Mischers das so erhaltene Gemisch (f).

2. Verfahren zur Herstellung einer Kaumasse vom Kaugummi-Typ, gekennzeichnet durch die nachstehenden aufeinanderfolgenden Maßnahmen:

(i) man bringt in eine Knetvorrichtung (A) vom Typ eines Industrieknetwerks mit Mitteln für die Heizung zumindest ein Elastomer (a) und zumindest einen mineralischen Füllstoff (b) ein, man heizt die Knetvorrichtung um deren Inhalt auf eine Temperatur zwischen etwa 80 und etwa 100° C zu bringen und knetet dort während einer Zeitdauer zwischen etwa 35 Minuten und etwa 75 Minuten den auf die genannte Temperatur der Knetvorrichtung gebrachten Inhalt;

(ii) man entnimmt hierauf den Inhalt der Knetvorrichtung, der dann aus einer nicht-klebenden Vormischungsmasse (c) gebildet wird;

(iii) man zerteilt diese Vormischungsmasse in Fragmente;

(iv) man bringt in einen Extruder (C) mit mehreren Abschnitten und mit Mitteln, um jeden Abschnitt bei einer gewünschten Temperatur zu halten, nacheinander dosierte Mengen ein
- von Fragmenten (d) der Vormischungsmasse und zumindest eines weiteren Ausgangsmaterials der Gummigrundlage,
- zumindest ein Plastifizierungsmittel (g, h) und
- zumindest eine Geschmack verleihende Substanz (j, k) insbesondere mit süßem Geschmack, wobei der Durchgang der Fragmente der Vormischungsmasse und des oder der weiteren Ausgangsstoffe der Gummigrundlage in dem Extruder innerhalb einiger Minuten (insbesondere 1 bis 5 Minuten) erfolgt und

(v) man evakuiert außerhalb des Extruders das erhaltene Produkt, kühlt es ab und formt es.

3. Verfahren gemäß Anspruch 2, dadurch gekennzeichnet, daß die Mischung der Fragmente der Vormischungsmasse (d) und zumindest ein weiteres Ausgangsmaterial (e) der Gummigrundlage vor dem Einbringen in den Extruder (C) in einem Pulvermischer (B) während mehrerer Minuten durchgeführt wird, wobei das in dem Mischer erhaltene Gemisch (f) in den ersten Abschnitt ($C_1$) des Extruders (C) eingeführt wird, während das oder die Plastifizierungsmittel (g, h) in den zweiten Abschnitt desselben eingeführt werden und die Geschmack verleihende Substanz bzw. Substanzen (j, k) in den dritten Abschnitt ($C_3$) des Extruders eingeführt werden.

4. Verfahren gemäß Anspruch 3, dadurch gekennzeichnet, daß in dem Extruder (c) mit drei aufeinanderfolgenden Abschnitten der erste Abschnitt ($C_1$) bei einer Temperatur in der Größenordnung von 60 bis 75° C gehalten wird und die nicht plastifizierte Gummigrundlage (f) aus dem Pulvermischer aufnimmt, der zweite Abschnitt ($C_2$) bei einer Temperatur in der Größenordnung von 50° C gehalten wird und den Abstrom des Abschnittes ($C_1$) und zumindest ein flüssiges Plastifizierungsmittel (g) und Wasser (h) aufnimmt, und der dritte Abschnitt ($C_3$) bei einer Temperatur in der Größenordnung von 50 bis 60° C gehalten wird und den Abstrom des Abschnittes ($C_2$) und die gegenüber Temperaturerhöhungen empfindlichsten Substanzen (j, k),wie süßende Substanzen und Aromastoffe, aufnimmt.

5. Kaumasse vom Kaugummi-Typ, dadurch gekennzeichnet, daß sie eine Gummigrundlage, erhalten nach dem Verfahren gemäß einem der Ansprüche 1 bis 4,enthält.

6. Kaumasse gemäß Anspruch 5, dadurch gekennzeichnet, daß sie nicht weniger als 97 % Gummigrundlage mit zumindest einem Plastifizierungsmittel, zumindest einem Füllstoff und Wasser einesteils und nicht mehr als 3 % süßendes Produkt und Geschmack-gebende Substanzen anderenteils enthält.

7. Kaumasse gemäß Anspruch 6, dadurch gekennzeichnet, daß die Gummigrundlage etwa 3 bis 30 % Wasser und etwa 2 bis 5 % Lecithin und/oder Glycerin als Emulgiermittel enthält.

8. Kaumasse gemäß Anspruch 6 oder 7, dadurch gekennzeichnet, daß man als Geschmack-gebende Substanzen nichtzuckerhaltige Produkte wie Saccharin und Aspartam verwendet.

9. Kaumasse gemäß einem der Ansprüche 5 bis 8, dadurch gekennzeichnet, daß sie als Gummigrundlage ein Produkt der folgenden Zusammensetzung enthält:

|  |  |
|---|---|
|  | etwa |
| natürliche und/oder Synthese-Elastomere | 3 bis 11 % |
| mikrokristalline Wachse und/oder hydrierte Öle | 5 bis 20 % |
| Glycerinmonostearat | 0,5 bis 15 % |
| halbsynthetische Harze und/oder Polyvinylacetat | 10 bis 30 % |
| Füllstoffe (Talk und/oder Calcium- carbonat) | 20 bis 50 % |
| Lecithin und/oder Glycerin | 2 bis 5 % |
| Antioxidationsmittel | 0,05 bis 0,1 % (in der Größenordnung von) |
| Natriumbenzoat | 0,1 % (in der Größenordnung von) |
| Wasser | 5 bis 30 % |

10. Dragee, erhalten aus der Kaugummimasse gemäß Anspruch 9 und dadurch gekennzeichnet, daß es eine Umhüllung von 3 bis 30 % aus nicht-assimilierbaren und nicht-kariogenen Substanzen, bestehend aus Talk oder Calciumcarbonat, Gummi arabicum und Polyvinylacetat, enthält.